# EUROPEAN PATENT APPLICATION

(11) **EP 2 743 423 A1**
(43) Date of publication of application: **18.06.2014**
(21) Application number: 13186222.9
(22) Date of filing: 26.09.2013
(51) Int. Cl.: E04C 3/29, E04C 3/292, F16B 15/00

(54) **Bracing element**

(30) Priority: 17.12.2012 GB 201222734
(71) Applicant: Illinois Tool Works Inc., Glenview, IL 60025 (US)
(72) Inventor: McAndrew, Scott, Glenrothes, Fife KY7 6QS (GB)
(74) Representative: Johnson, Lucy Elizabeth

(57) **Abstract**

The invention provides a bracing element for spacing timber elements in a truss or joist, the bracing element comprising at least two connector plates connected to and spaced apart from one another by at least one elongate spacing portion, wherein at least part of the elongate spacing portion is made from composite material.

## Description

### Field of the Invention

The invention relates to a bracing element for spacing timber chords in a joist or truss. In particular, though not exclusively, the invention relates to a bracing element capable of minimizing thermal bridging through joists or trusses. The invention further relates to a joist comprising one or more bracing elements according to the invention.

### Background to the Invention

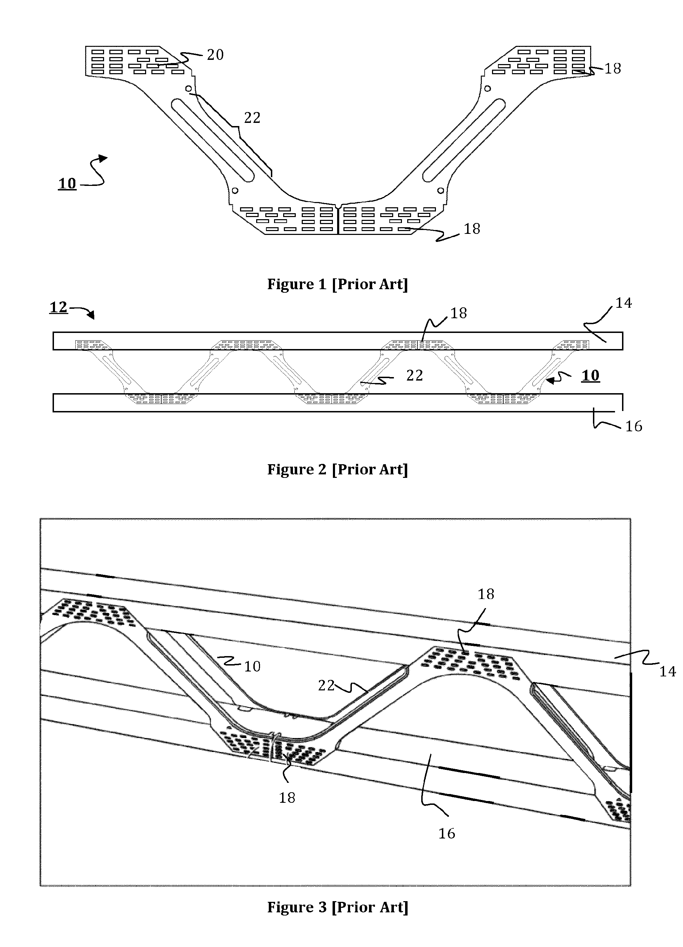

Bracing elements for connecting and spacing parallel chords of a joist or truss are known in the building and construction industry. In particular, bracing elements formed of metal are well known, such metal bracing elements being attached to the parallel chords of the joist or truss so as to form the web between the parallel chords. An example of a known bracing element 10 (V-shaped) is shown in Figure 1.

Open, bracing element-type joists 12 or trusses are commonly used in floor and roof structures and the like (i.e. wall structures). Typically, as shown in Figures 2 and 3, they include an upper timber chord 14, a lower timber chord 16 and one or more bracing elements 10, typically metal bracing elements, extending in diagonal or vertical orientation between the upper and lower chords 14, 16.

Various configurations of bracing element 10 are known, and these include I-shaped, V-shaped, S-shaped and W-shaped elements.

In use, parallel chord joists are arranged with an upper timber chord 14 positioned at a predetermined distance above, and generally parallel to, a lower timber chord 16. Bracing elements 10 extending between the chords 14, 16 connect the chords 14, 16 and maintain them in the required spaced relation. Open, bracing element-type joists 12 or trusses provide the advantage that utilities such as piping and wiring may be passed through the spaces between chords.

As shown in Figure 2 and 3, the joist 12 may comprise a plurality of bracing elements 10 forming the web of the joist. The joist 12 may comprise bracing elements 10 having one or more different shapes. The joist 12 may comprise bracing elements 10 attached at one side of the timber chords 14, 16, alternatively, the joist 12 may comprise bracing elements 10 attached at both sides of the timber chords (see Figure 3). In arrangements where the bracing elements 10 are attached at both sides of the timber chords 14, 16, the bracing elements 10 may be in parallel opposition to one another or may be staggered in longitudinal relation to one another.

Bracing elements 10 may be attached to the chords 14, 16 by a number of methods, but are commonly attached by connector plates (or nail plates) 18 having protruding teeth 20 that embed in the wooden chord 14, 16. Typically, the connector plates 18 are attached to a side surface of the, or each, chord 14, 16 of the joist 12. The connector plates 18 or nail plates are typically formed integrally with an elongate spacing portion 22 of the bracing element 10. The elongate spacing portion 22 is the bearing portion that transfers and withstands forces between the upper and lower timber chords 14, 16 via the connector plates 18.

However, since metals, such as used in the commonly known bracing elements 10, are thermally conductive materials the maximum possible conductive energy transfer is provided across the flooring and/or roof structures, despite insulating material that may be placed in the space between the chords 14, 16. This energy loss is also known as "thermal bridging".

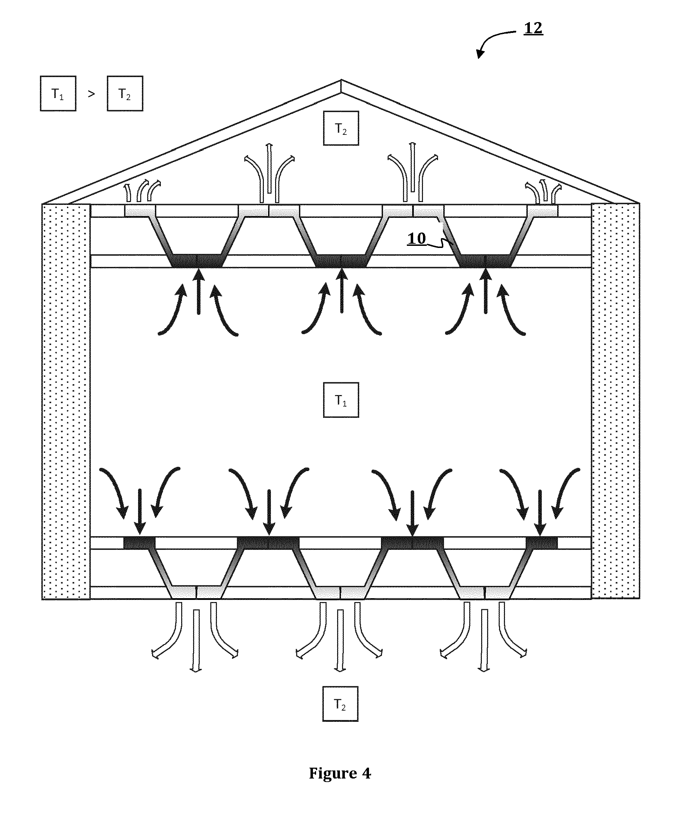

As illustrated in Figure 4, "thermal bridging" is created when materials that are poor thermal insulators, such as the known metal bracing elements 10, come into contact, allowing heat to flow from a higher temperature environment T₁ to a lower temperature environment T₂ (heat transfer is illustrated by black and white arrows) through the path of least thermal resistance (i.e. metal bracing element 10) leading to significantly increased heat losses.

It would therefore be desirable to provide a bracing element and/or joist that is capable of minimizing the "thermal bridging" effect and improve the general energy efficiency of structural buildings assemblies, such as any heated or cooled building enclosure or building envelope.

### Summary of the Invention

Preferred embodiments of the invention seek to overcome one or more of the above disadvantages of the prior art.

According to a first aspect of the present invention, there is provided a bracing element for spacing timber elements in a truss or joist, the bracing element comprising at least two connector plates connected to and spaced apart from one another by at least one elongate spacing portion, wherein at least part of said elongate spacing portion is made from composite material. Advantageously, said composite material may be a thermal insulator.

This provides the advantage that heat flow through the bracing element is prevented or at least minimized. In particular, the thermally insulating part of the elongate spacing portion is adapted to disrupt or decrease the heat conduction path between the at least two connector plates and therefore prevent or minimize "thermal bridging" between the spaced apart chords, contributing to maximizing the energy efficiency of a building structure.

The composite material may further be adapted to minimize acoustic transmission between said at least two connector plates. This provides the further advantage of minimizing acoustic transmission through the joists, therefore contributing to minimizing the noise level in a building structure.

Advantageously, the composite material may extend along the full length of said elongate spacing portion.

The elongate spacing portion may comprise a bearing portion that is integral with said at least two connector plates, the bearing portion being at least partially encased by said composite material, so as to minimize thermal losses through said bearing portion. Alternatively, the elongate spacing portion may comprise a bearing portion that is integral with said at least two connector plates and which is sandwiched between said composite material, so as to minimize thermal losses through said bearing portion. Alternatively, the elongate spacing portion may comprise a bearing portion that is coupled to said at least two connector plates and which is formed from said composite material. In the latter alternative arrangement, the bearing portion extends between the at least two connector plates and is connected to each of the at least two connector plates.

Advantageously, said composite material may be any one of a polymer material, a polymer composite material, carbon fibre, carbon fibre composite material and glass fibre or glass fibre composite material. Even more advantageously, the polymer and/or polymer composite material may be polypropylene and/or polypropylene composite material, respectively.

According to a second aspect of the present invention, there is provided a joist comprising first and second timber chords in spaced apart parallel relation and at least one bracing element according to the first aspect of the present invention, which is attached to said first and second timber chords at a surface thereof.

This provides the advantage of floor, roof and/or wall structures capable of minimizing "thermal bridging" and therefore improving thermal efficiency as well as acoustic dampening efficiency.

Where the terms "upper", "lower", "uppermost", "lowermost" are used within the specification, they should be considered as no more than relative, as the bracing element of the invention may be used in any appropriate orientation.

### Brief Description of the Drawings

Preferred embodiments of the present invention will now be described, by way of example only and not in any limitative sense, with reference to the accompanying drawings, in which:
**Figure 1** shows plan view of known metal bracing elements in a V-shape formation;
**Figures 2** shows a plan view of a joist having upper and lower chords spaced apart and connected by known metal bracing elements;
**Figure 3** shows a partial perspective view of a joist having upper and lower chords and bracing elements attached to the chords on both sides and in parallel to each other;
**Figure 4** shows a simplified schematic illustration of the "thermal bridging" effect in a building structure having an interior temperature T₁ that is higher than the outside temperature T₂;
**Figure 5** shows **(a)** a plan view of a bracing element according to a first embodiment of the invention; **(b)** a partial sectional view of the bracing element along B-B, and **(c)** a side view of part of the bracing element in (a) and (b);
**Figure 6** shows a sectional view of the bracing element along A-A in Figure 5(a);
**Figure 7** shows **(a)** a first plan view of a bracing element according to a second embodiment of the invention; **(b)** a second plan view of a bracing element according to a second embodiment of the invention, and **(c)** a side view of part of the bracing element in (a), and
**Figure 8** shows a sectional view of the bracing element along C-C in Figure 7(a).

Embodiments of the invention will now be described, by way of example only, with reference to the accompanying drawings, in which:

### Detailed description of the preferred embodiment(s)

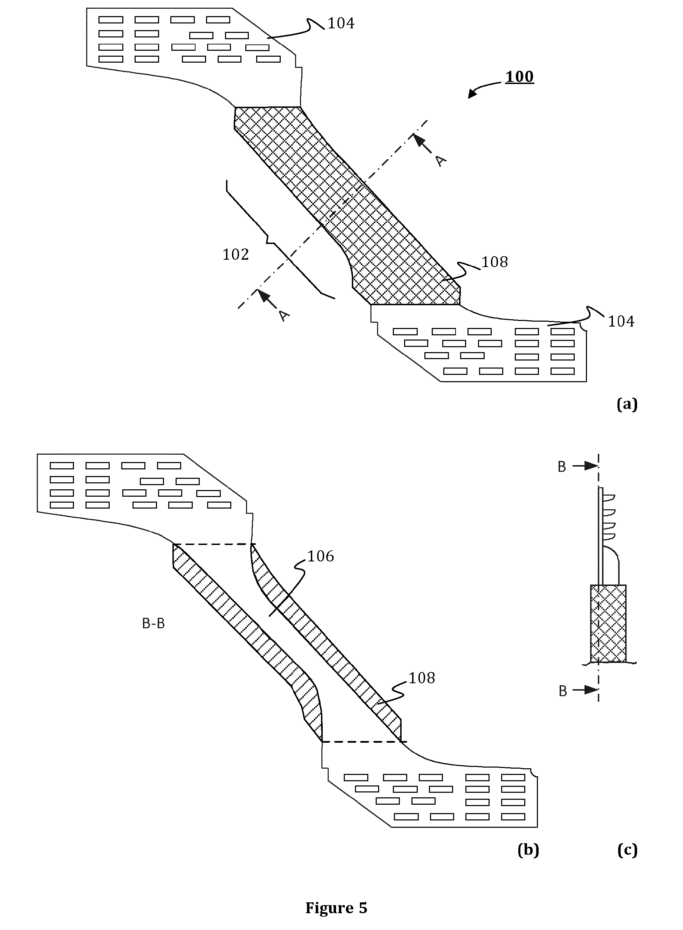

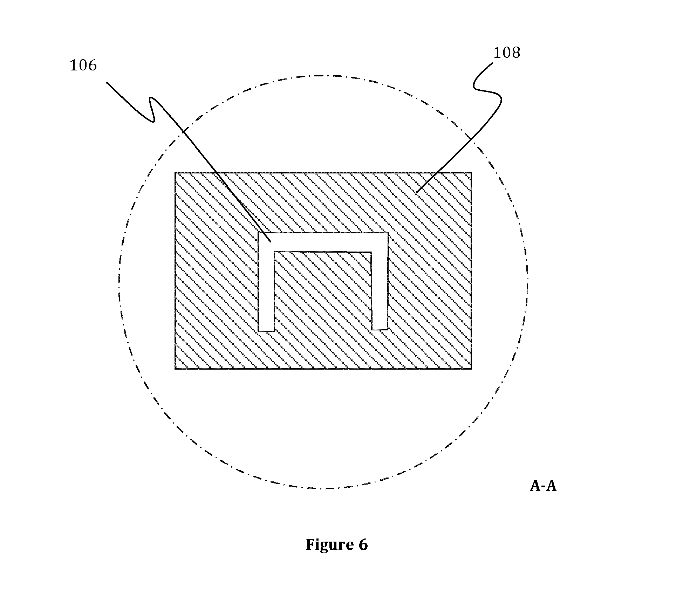

Referring now to Figure 5 (a), (b) and (c) and Figure 6, a first embodiment of the bracing element 100 of the present invention comprises an elongate spacing portion 102, extending between two nail plates 104. Nail plates for attaching bracing elements to the timber chords of joists are known in the art and are commonly used to attach metal bracing elements to timber chords. It will, however, be apparent that alternative known attachment means suitable for attaching a bracing element to a timber joist, such as nails, screws, staples and the like, may be employed in the invention. The elongate spacing portion 102 comprises a bearing portion 106 integrally formed with the two nail plates 104 and encased by a composite material 108, such as, for example, any thermally insulating polymer or polymer composite, carbon fibre material or carbon fibre composite, or any glass fibre or glass fibre composite. However, any other thermally insulating material may be used to encase the bearing portion 106 of the elongate spacing portion 102. In this particular example, the nail plates 104 and integrally formed bearing portion 106 are made from a metal or metal alloy.

Advantageously, the bearing portion 106 is fully embedded in the composite material 108, either via a moulding process, where the composite material 108 is moulded around the whole or at least part of the bearing portion 106. Alternatively, all or at least part of the bearing portion 106 may be encased by the composite material 108 by simply attaching the composite material around the bearing portion 106, using an adhesive or any other mechanical fixture means. Advantageously, the composite material 108 extends along the total length of the bearing portion 106 (i.e. from upper nail plate 104 to lower nail plate 104) in order to maximize thermal insulation of the bearing portion 106. However, any other length of composite material 108 may be used to improve the thermal insulation of the bearing portion 106.

Figure 6 shows a magnified sectional view along A-A of the bracing element 100, where the bearing portion 106 (e.g. a double flanged metal plate) is embedded in a composite material 108 via a moulding process. For example, the bearing portion 106 of the bracing element 100 is simple placed in a hot polymer bath until the bearing portion 106 is fully enclosed by the liquefied polymer material and then cooled / cured too harden the composite material around the bearing portion 106.

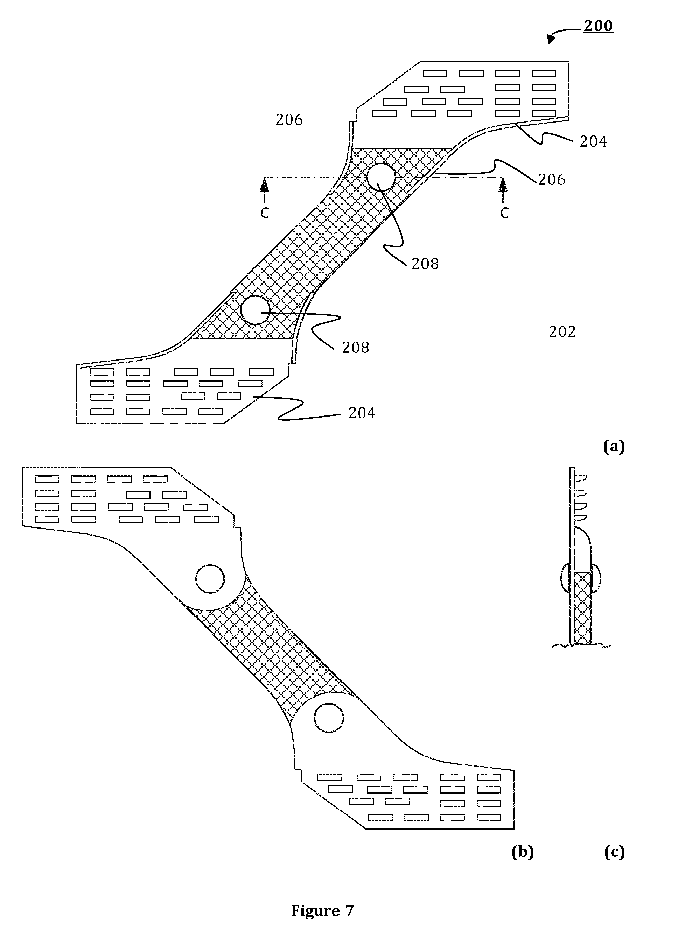

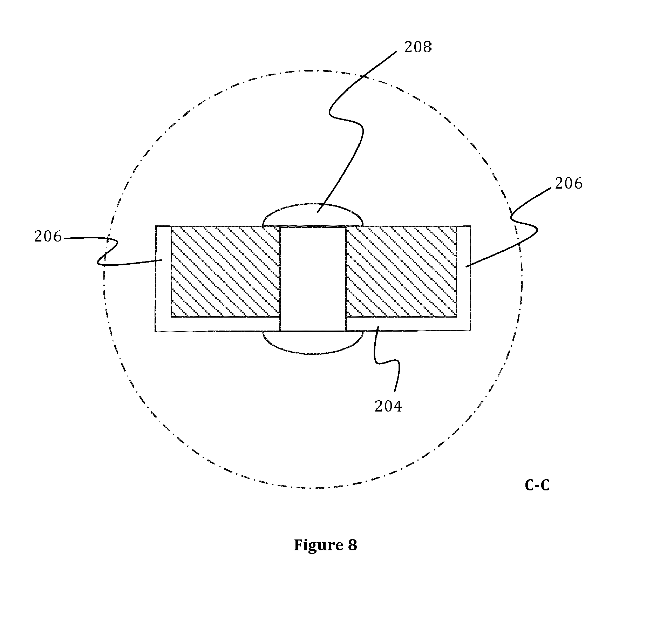

Referring now to Figure 7 (a), (b) and (c), and Figure 8, a second embodiment of the bracing element 200 of the present invention comprises an elongate spacing portion 202, extending between two nail plates 204. Nail plates for attaching bracing elements to the timber chords of joists are known in the art and are commonly used to attach metal bracing elements to timber chords. It will, however, be apparent that alternative known attachment means suitable for attaching a bracing element to a timber joist, such as nails, screws, staples and the like, may be employed in the invention.

The elongate spacing portion 202 is a one-piece link-member attachable to the upper and lower nail plate 204 so as to form a structurally reliable bracing element 200. The elongate spacing portion 202 is made from a thermally insulating composite material, such as, for example, any thermally insulating polymer or polymer composite, carbon fibre material or carbon fibre composite, or any glass fibre or glass fibre composite. However, it is understood by the person skilled in the art that any other thermally insulating material may be used.

The use of thermally insulating composite material and/or acoustically dampening material as link between the upper and lower nail plate 204 minimizes or even eliminates any "thermal bridging" and/or acoustic transmission between the upper and lower nail plate 204. In this particular example, the elongate spacing portion 202 is attached to respective nail plates 204 via a combination of a guided form-fit, using flange portions 206 to prevent any pivotal movement between the nail plate 204 and the elongate spacing portion 202, and mechanical fastening, using rivets 208. However it is understood by the person skilled in the art that any other suitable fastening / fixing / attachment means may be used to fixedly attach the nail plates 204 to the elongate spacing member 202. For example, the elongate spacing member 202 may be mechanically fastened to respective nail plates 204 using any number of screws or bolts, welding, moulding, adhesive bonding, curing or any combination thereof.

Figure 8 shows a magnified sectional view across C-C of the bracing element 200 shown in Figure (a), where the composite elongate spacing portion 202 is form fitted within the space defined by the flange portions 206 and the nail plate 204 and mechanically fastened using a rivet 208 through the elongate spacing portion 202 and the nail plate 204.

In addition, it is understood by the person skilled in the art that any suitable shape and form of the elongate spacing member 202 may be used to form a bracing element 200.

During assembly, any suitable number of bracing elements 100, 200 is used to connect two chords and form a joist (not shown) according to the present invention. The bracing elements 100, 200 may be applied to one or both sides of the chords, and may be in parallel or in alternate formation to each other. Preferably, only bracing elements 100 according to the first embodiment or only bracing elements 200 according to the second embodiment are used for any one joist assembly and/or building structure.

It will be appreciated by persons skilled in the art that the above embodiments have been described by way of example only and not in any limitative sense, and that various alterations and modifications are possible without departing from the scope of the invention as defined by the appended claims.

## Claims

1. A bracing element for spacing timber elements in a truss or joist, the bracing element comprising at least two connector plates connected to and spaced apart from one another by at least one elongate spacing portion, wherein at least part of said elongate spacing portion is made from composite material.

2. A bracing element according to claim 1, wherein said composite material is a thermal insulator.

3. A bracing element according to any one of the preceding claims, wherein said composite material is adapted to minimize acoustic transmission between said at least two connector plates.

4. A bracing element according to any one of the preceding claims, wherein said composite material extends along the full length of said elongate spacing portion.

5. A bracing element according to any one of the preceding claims, wherein said elongate spacing portion comprises a bearing portion integral with said at least two connector plates, the bearing portion being encased by said composite material, so as to minimize thermal losses through said bearing portion.

6. A bracing element according to any one of claims 1 to 4, wherein said elongate spacing portion comprises a bearing portion integral with said at least two connector plates and which is sandwiched between said composite material, so as to minimize thermal losses through said bearing portion.

7. A bracing element according to any one of claims 1 to 4, wherein said elongate spacing portion comprises a bearing portion coupled to said at least two connector plates and which is formed from said composite material.

8. A bracing element according to claim 7, wherein said bearing portion extends between the at least two connector plates and is connected to each of said at least two connector plates.

9. A bracing element according to any one of the preceding claims, wherein said composite material is any one of a polymer material, a polymer composite material, carbon fibre, carbon fibre composite material and glass fibre or glass fibre composite material.

10. A bracing element according to claim 8, wherein said polymer and/or polymer composite material is a polypropylene and/or polypropylene composite material, respectively.

11. A joist comprising first and second timber chords in spaced apart parallel relation and at least one bracing element according to any one of claims 1 to 10 attached to said first and second timber chords at a surface thereof.

12. A bracing element substantially as hereinbefore described with reference to the accompanying drawings.

13. A joist substantially as hereinbefore described with reference to the accompanying drawings.
